# EUROPÄISCHE PATENTSCHRIFT

(11) **EP 2 050 045 B1**
(45) Veröffentlichungstag und Bekanntmachung des Hinweises auf die Patenterteilung: **21.03.2012**
(21) Anmeldenummer: 07786501.2
(22) Anmeldetag: 01.08.2007
(51) Int. Cl.: G06K 19/077, B42D 15/10, G11B 7/24, G11B 23/40, G07D 7/00

(54) **SICHERHEITSELEMENTE FÜR ANTENNEN**
SECURITY ELEMENTS FOR AERIALS
ÉLÉMENTS DE SÉCURITÉ POUR ANTENNES

(30) Priorität: 03.08.2006 DE 102006036286
(43) Veröffentlichungstag der Anmeldung: 22.04.2009
(73) Patentinhaber: Giesecke & Devrient GmbH, 81677 München (DE)
(72) Erfinder: SZILJER, Franz, 82256 Fürstenfeldbruck (DE); OJSTER, Albert, 82031 Grünwald (DE); WELLING, Ando, 84424 Isen (DE); HUBER, Peter, 82256 Fürstenfeldbruck (DE); TARANTINO, Thomas, 83410 Laufen (DE)
(86) Internationale Anmeldenummer: PCT/EP2007/006818
(87) Internationale Veröffentlichungsnummer: WO 2008/014993

(56) Entgegenhaltungen:
- EP-A- 1 179 811
- EP-A1- 0 905 657
- WO-A-02/095674
- WO-A-03/102713
- DE-A1- 19 630 648
- DE-C1- 19 963 300
- JP-A- 2005 321 911
- US-A1- 2002 160 786
- US-B1- 6 830 192
- US-B1- 6 848 618

## Beschreibung

Die vorliegende Erfindung bezieht sich auf einen tragbaren Datenträger, bestehend aus einer Vorrichtung zur Speicherung und Verarbeitung von Daten, einer Antenne zur Energie- und Informationsübertragung, die mit der Vorrichtung verbunden ist, sowie einen die Vorrichtung und die Antenne umgebenden Kunststoff und ein Verfahren zu deren Herstellung.

Tragbare Datenträger, wie z.B. Chipkarten, werden unter anderem zur Feststellung von Berechtigungen oder zur Identifizierung des Inhabers genutzt. Dafür sind oft zusätzlich zu der eingebrachten Vorrichtung zur Speicherung und Verarbeitung von Daten Sicherheitsmerkmale auf dem Datenträger erforderlich, um die Echtheit des Datenträgers zu prüfen. Da eine Echtheitsprüfung auch durch Menschen und nicht nur durch Maschinen durchgeführt wird, beruhen viele Sicherheitsmerkmale, z.B. Unterschriftstreifen, Guillochen, Kinegramm, Barcode, etc., auf optischen Merkmalen. Problematisch bei diesen Merkmalen ist, daß sie gewöhnlich nur bei nicht transparenten Datenträgern sinnvoll eingesetzt werden können.

WO 02/095674 A1 offenbart ein Paar von elektrostatischen Antennen, welche auf einem synthetischen Papiersubstrat durch ein thermisches Transferdruckverfahren ausgebildet sind und ein IC-Chipmontageelement, das sich auf den Antennen befindet und mit diesen verbunden ist. Die Antenne besteht aus einer leitfähigen Schicht, hauptsächlich bestehend aus Grafit und Kohlenstoff und ein mit Wärme schmelzbares Material, das Wachs und Harz enthält, Das IC-Chipmontageelement ist auch mit einem Paar von elektrostatischen Antennen ausgestattet, die so miteinander verbunden sind, dass sie sich gegenüberliegen.

DE 199 63 300 C1 betrifft ein Transponderetikett, welches eine Schutzbeschichtung aufweist, und eine Schutzbeschichtung für ein Transponderetikett. Die Schutzbeschichtung besteht aus einem flexiblen Material, welches die Transponderbauteile vor Stoß-, Zug- und Torsionsbelastungen schützt. Bevorzugt umfasst das flexible Material ein Polyadditionsprodukt zweier Komponenten, wobei die erste Komponente ein mindestens zwei Jesozyanatgruppen aufweisendes, organisches Molekül darstellt und die zweite Komponente ein mindestens zwei Hydroxylgruppen aufweisendes, organisches Molekül darstellt.

US 2002/0160786 A1 offenbart ein Verfahren zum wahlweisen Entfernen von Metall von einem metallisierten Substrat, z.B. einem metallisierten Polymerfilm, und der damit verbundenen Herstellung von Bauelementen. Das Verfahren enthält das wahlweise Aussetzen der metallisierten Oberfläche einer chemischen Lösung zum Demetallisieren, d.h. zum Oxidieren. Die metallische Schicht kann wahlweise der Demetallisierungslösung ausgesetzt werden unter Verwendung eines flexografischen Druckprozesses, worin Druckrollen verwendet werden, um die Demetallisierungslösung auf die metallisierte Oberfläche zu übertragen. Eine Identifikationsvorrich-tung enthält z.B. ein holografisches, retroreflektives oder anderes metallisiertes Material und einen Hochfrequenztransponder. Der Hochfrequenztransponder enthält einen HF-Chip und eine Antenne, welche elektrisch mit dem Chip verbunden sind. Die Identifikationsvorrichtung, welche das holografische Bild enthält, ermöglicht sowohl die elektronische Identifikation mittels dem Lesen von Identifikationsdaten, welche in dem Chip abgespeichert sind, und eine optische Identifikation über das holografische Bild.

EP 1 179 811 A1 bezieht sich auf ein Sicherheitsdokument, das ein Hologramm und eine Sendevorrichtung umfasst, um bestimmte Daten kontaktlos auszusenden. Die Sendevorrichtung umfasst eine integrierte Schaltung und eine Antenne, welche mit der integrierten Schaltung verbunden ist. Die Sendevorrichtung ist in das Hologramm integriert. In einem vorteilhaften Ausführungsbeispiel wird die integrierte Schaltung in das Substrat des Hologramms integriert und die Metallschicht des Hologramms bildet die Antenne, welche mit der integrierten Schaltung verbunden ist.

WO 03/102713 A2 offenbart eine elektromagnetische Kommunikationseinheit in Form einer Antenne, die in einen durchsichtigen Teil des Körpers eines kontaktlosen, intelligenten, tragbaren Objektes, wie z.B. einer Chipkarte oder eines elektronischen Labels integriert ist. Um die Form der elektromagnetischen Kommunikationseinheit visuell attraktiv zu gestalten, wird der elektromagnetischen Kommunikationseinheit eine dekorative Form verliehen unter Berücksichtigung einer Verbesserung der elektromagnetischen Kommunikationseigenschaften.

DE 196 30 648 A1 offenbart einen Geldschein, der zur Steigerung seiner Fälschungssicherheit und zur einfachen Möglichkeit der Verfolgung registrierter Geldscheine einen Transponderchip aufweist, welcher Daten für den Geldwert und die Registriernummern des jeweiligen Geldscheines aufweist.

EP 0 905 657 A1 offenbart eine Banknote, welche mit einem Identifikations-und/oder Authentifikationselement, welches aus einer integrierten Schaltung besteht, welche in einer elektronischen Form sicher von außen verfügbare Daten abspeichert, wie z.B. den Wert, die Seriennummer, den Herausgeber und das Datum der Herausgabe ausgestattet ist.

Aufgabe der Erfindung ist es, für einen transparenten oder teilweise transparenten, tragbaren Datenträger in Form einer Chipkarte geeignete Sicherheitselemente und ein Verfahren zur Herstellung von tragbaren Datenträgern mit solchen Sicherheitselementen zur Verfügung zu stellen.

Die Aufgabe wird durch den Gegenstand der unabhängigen Ansprüche gelöst. Erfindungsgemäß enthält die Antenne der Chipkarte ein Pigment als Sicherheitsmerkmal, dessen Farbe sich abhängig von der Temperatur verändert.

Die abhängigen Ansprüche definieren bevorzugte Ausführungsbeispiele.

Das wesentliche Element der Erfindung ist, daß wenigstens ein Sicherheitsmerkmal auf die Antennenoberfläche oder auf eine Beschichtung der Antenne aufgebracht wird oder in das Antennenmaterial eingebracht wird oder mit dem Antennenmaterial vermischt wird oder daß die Antennenoberfläche oder die Beschichtung der Antenne ganz oder teilweise bedruckt oder der ganzen oder nur Teilen der Antennenoberfläche oder der Beschichtung der Antenne eine Struktur eingeprägt wird.

Das Bedrucken oder Prägen oder Beschichten der Antennenoberfläche oder das Einbringen von Sicherheitsmerkmalen in das Antennenmaterial oder das Aufbringen von Sicherheitsmerkmalen auf die Antennenoberfläche hat den Vorteil, daß mit relativ einfachen und kostengünstigen Mitteln die Sicherheitsmerkmale mit der Antenne verbunden werden können. Ferner lässt sich damit auch eine Herstellung von tragbaren Datenträgern mit sehr geringen Ausschußquoten erreichen.

Der Vorteil der Erfindung ist, daß bei transparenten oder teilweise transparenten tragbaren Datenträgern bereits anhand der optischen Eigenschaften der sichtbaren oder teilweise sichtbaren Antenne die Echtheit des tragbaren Datenträgers anhand der erfindungsgemäßen Sicherheitsmerkmale beurteilt werden kann. Da sich die Sicherheitsmerkmale auf und/ oder in der Antenne befinden und vom Kunststoff umschlossen sind, können sie nur sehr schwer gefälscht werden, weil zur Fälschung z.B. einer Chipkarte der Kartenkörper und die Antenne komplett zerstört oder neu hergestellt werden müssten. Dazu müsste der ganze Herstellungsprozeß einer Chipkarte aufgebaut und unterhalten werden, was einen sehr hohen Aufwand bedeutet und damit einen hohen Grad an Sicherheit gegen die Fälschung und den Missbrauch ergibt. Neben dem Aspekt der Sicherheit können die Sicherheitsmerkmale auch als Designelemente benutzt werden.

Als Sicherheitsmerkmale kommen Pigmente oder Mikropartikel oder Farbkapseln, wie sie im Folgenden näher beschrieben werden, oder Sicherheitsfäden oder Beschichtungen, deren Farbe sich in Abhängigkeit von der Temperatur verändert in Frage.

Diese Sicherheitsmerkmale haben den Vorteil, daß es sich hier bereits um sehr erprobte Merkmale handelt, die z.B. auch im Banknoten oder Wertpapierdruck bereits erfolgreich eingesetzt werden. Die in den Anwendungsbereichen, z.B. Banknotendruck oder Wertpapierdruck, erworbenen Kenntnisse können für die vorliegenden Sicherheitsmerkmale einfach übernommen werden.

Im Folgenden soll wegen ihrer erprobten Eigenschaften in den genannten Bereichen auf die besonders geeigneten Sicherheitsmerkmale im Bereich der Pigmente und deren Eigenschaften eingegangen werden. Diese lassen sich besonders einfach und kostengünstig verarbeiten.

Pigmente können grob in zwei Klassen eingeordnet werden. Es gibt einerseits die ohne technische und andererseits die nur mit technischen Hilfsmitteln erkennbaren Pigmente.

Zu den ohne technische Hilfsmittel erkennbaren Pigmente zählen z.B. Farbpigmente oder Pigmente mit optischen Effekten. Pigmente mit optischen Effekten können unterschieden werden in Pigmente mit Farbkippeffekt, z.B. Dünnschichtpigmente, wie z.B. Iriodin®, oder Flüssigkristallpigmente; oder thermochrome Pigmente, z.B. Flüssigkristalle; oder Pigmente mit Glitzereffekt, z.B. Metallplättchen aus z.B. Aluminium oder Silber.

Diese Pigmente haben den Vorteil, daß bereits mit bloßem Auge die Echtheit eines erfindungsgemäßen Datenträgers beurteilt werden kann. Diese Pigmente vereinfachen und beschleunigen damit die Echtheitsprüfung eines Datenträgers deutlich.

Zu den nur mit technischen Hilfsmitteln erkennbaren Pigmente zählen Lumineszenzpigmente, magnetische Pigmente, elektrisch leitende Pigmente oder Strahlung im spektralen Infrarotbereich absorbierende Stoffe.

Lumineszenzpigmente werden in Abhängigkeit von dem zu erzielenden Sicherheitslevel ausgewählt. Bei niedrigem Sicherheitslevel, wie z.B. an Supermarktkassen, reichen Fluoreszenzstoffe aus, die durch elektromagnetische Strahlung im ultravioletten Spektralbereich angeregt werden und im sichtbaren Spektralbereich Licht emittieren. Bei hohem Sicherheitslevel, wie z.B. in Zentralbanken, werden Lumineszenzpigmente verwendet, die im nicht sichtbaren Spektralbereich bei Anregung Strahlung emittieren und deren Strahlung nur mit speziellen Sensoren vermessen werden kann. Grundsätzlich können Lumineszenzpigmente durch elektromagnetische Strahlung im ultravioletten oder infraroten oder sichtbaren Spektralbereich oder durch ein elektrisches oder magnetisches Feld angeregt werden.

Die nur mit technischen Hilfsmitteln erkennbaren Pigmente können somit als Ergänzung zu den ohne technische Hilfsmittel erkennbaren Pigmenten verwendet werden, sozusagen als zusätzlicher Schutz, oder sie können alleine für tragbare Datenträger in besonders sicherheitsrelevanten Bereichen eingesetzt werden. Beispielhaft sei hier der Tresorbereich von Großbanken genannt, in dem sich nur sehr bestimmte Personen aufhalten dürfen. Eine Fälschung von tragbaren Datenträger, z.B. Chipkarten, für solche Bereiche würde durch nur mit technischen Hilfsmitteln erkennbare Pigmente deutlich erschwert.

Neben den Pigmenten werden mit Vorteil auch Mikropartikel und/oder Farbkapseln als Sicherheitsmerkmal verwendet. Auch bei diesen Merkmalen kann zwischen den ohne und den nur mit technischen Hilfsmitteln erkennbaren Sicherheitsmerkmalen unterschieden werden.

Mikropartikel sind kleine Teilchen, die eine bestimmte Form, Farbe, Oberflächenstruktur, Beschriftung oder Bilder aufweisen. Eine mögliche Ausführungsform wäre, daß das Mikroteilchen den Schriftzug oder das Logo eines Unternehmens darstellt. Somit wäre dann z.B. eine Karte echt, wenn auf den Mikropartikeln das Unternehmenslogo erkennbar ist.

Farbkapseln sind nach außen hin elektrisch isolierte Kapseln, die bei einer Veränderung des sie umgebenden elektrischen Feldes ihre Farbe ändern. Solche Farbkapseln sind auch unter der Bezeichnung e-Ink bekannt. Diese Farbkapseln können auf der Antenne z.B. in bestimmten Mustern angeordnet werden. Zur Überprüfung der Echtheit würde dann bei Änderung des die Karte umgebenden elektrischen Feldes z.B. ein bestimmtes Farbmuster erscheinen, wenn die Karte echt ist.

Die oben genannten Sicherheitsmerkmale sind von außen durch den transparenten oder teiltransparenten Datenträger auf der Antenne erkennbar, wobei als Antenne alle geeigneten Antennentypen für tragbare Datenträger verwendet werden können, wie z. B. gedruckte Antennen, Drahtantennen oder geätzte Antennen.

Der Vorteil der gedruckten Antennen, Drahtantennen oder geätzten Antennen ist, daß es sich bei diesen Antennentypen um bereits sehr erprobte und vergleichsweise kostengünstig herzustellende Antennen handelt.

Bei gedruckten Antennen können mit Vorteil die oben genannten Sicherheitsmerkmale verwendet werden. Diese werden einfach bei der Herstellung der Antenne mit einem Bindemittel einer Antennendruckpaste vermischt und können so sehr leicht verarbeitet werden. Eine andere Möglichkeit ist, daß die oben genannten Sicherheitsmerkmale auf die gedruckte Antenne aufgetragen werden.

Als elektrisch leitendes Material der Antennendruckpaste für gedruckte Antennen können alle geeigneten Stoffe verwendet werden, wie z.B. Silber oder Gold. Optische Effekte oder Farben der elektrisch leitenden Materialien können hier besonders vorteilhaft ausgenutzt werden.

Eine Drahtantenne besteht aus einem Draht, der mit einem Isolierlack beschichtet ist. Indem die oben genannten Sicherheitsmerkmale oder Sicherheitsfäden mit dem Isolierlack auf den Draht oder auf den Isolierlack aufgetragen werden, lässt sich eine einfache und kostengünstige Verarbeitung der Sicherheitsmerkmale erreichen. Alternativ zu den vorher genannten Sicherheitsmerkmalen oder Sicherheitsfäden kann sich als weiteres Sicherheitsmerkmal eine Beschichtung anstatt oder zusätzlich zu dem Isolierlack über dem Draht befinden, wobei sich die Farbe der Beschichtung in Abhängigkeit von der Temperatur verändert. Dies hätte den Vorteil, daß zur Echtheitsprüfung neben die optische Prüfung mittels elektromagnetischer Strahlung in einem bestimmten Spektralbereich auch noch eine optische Prüfung mittels Wärme tritt und damit eine höhere Sicherheit gegen Fälschung und Missbrauch erreicht wird.

Um eine verbesserte Leitfähigkeit und Verarbeitbarkeit zu erreichen, kann der Draht auch aus einer geeigneten Legierung bestehen.

Eine weitere mögliche Ausführungsform der Antenne ist die einer geätzten Antenne. Diese kann sehr einfach und zuverlässig durch erprobte Fertigungsverfahren hergestellt werden, wobei hier sehr hohe Stückzahlen in kurzer Zeit bei einem günstigen Herstellungspreis erreicht werden können. Bei der geätzten Antenne können die oben genannten Sicherheitsmerkmale auf die Antenne aufgetragen werden.

Als tragbare Datenträger kommen, neben Chipkarten, alle für die Erfindung geeigneten tragbaren Datenträger in Frage, wie z.B. Tag, KeyFob, kontaktloser USB-Stick, Mobiltelefone, etc. bei denen die Antenne in das transparente oder teiltransparente Gehäuse integriert ist.

Die Aufgabe der Erfindung wird ferner ausgehend vom Oberbegriff eines Verfahrens zur Herstellung eines tragbaren Datenträgers mit einer z.B. oben beschriebenen gedruckten oder aus Draht hergestellten oder geätzten Antenne, einem Kunststoffkörper und einer Vorrichtung zur Speicherung und Verarbeitung von Daten, z.B. einem Halbleiterchip, die mit der Antenne verbunden ist, durch das Kennzeichen von Anspruch 36 gelöst, indem wenigstens ein Sicherheitsmerkmal auf oder in die Antenne gebracht wird oder daß die Oberfläche der Antenne ganz oder teilweise bedruckt oder der ganzen oder nur Teilen der Antennenoberfläche eine Struktur eingeprägt wird. Wie oben beschrieben, ist das wesentliche Element der Erfindung, daß wenigstens ein Sicherheitsmerkmal in die Antenne und/oder auf die Antennenoberfläche und/oder auf eine Beschichtung der Antenne aufgebracht wird und/oder daß die Antennenoberfläche oder die Beschichtung der Antenne ganz oder teilweise bedruckt und/ oder der ganzen oder nur Teilen der Antennenoberfläche oder der Beschichtung der Antenne eine Struktur eingeprägt wird.

Für die Vorteile des Bedruckens oder Prägens oder Beschichtens der Antennenoberfläche gilt das bereits oben Ausgeführte.

Der Vorteil der Erfindung insgesamt ist, daß bei transparenten oder teilweise transparenten tragbaren Datenträgern, wie z.B. Chipkarten, bereits anhand der optischen Eigenschaften der sichtbaren oder teilweise sichtbaren Antenne die Echtheit des tragbaren Datenträgers anhand der erfindungsgemäßen Sicherheitsmerkmale beurteilt werden kann. Da sich die Sicherheitsmerkmale in und/oder auf der Antenne befinden und mit Kunststoff umschlossen sind, können sie nur sehr schwer gefälscht werden, weil zur Fälschung ein tragbarer Datenträger komplett zerstört oder neu hergestellt werden müsste. Dazu müsste der ganze Herstellungsprozeß für einen tragbaren Datenträger, wie z.B. ein Chipkarte, aufgebaut und unterhalten werden, was einen sehr hohen Aufwand bedeutet und damit einen hohen Grad an Sicherheit gegen die Fälschung und den Missbrauch von erfindungsgemäßen Chipkarten ergibt. Neben dem Aspekt der Sicherheit können die Sicherheitsmerkmale auch als Designelemente benutzt werden.

Bezüglich der Eigenschaften und Vorteile der Sicherheitsmerkmale von Pigment, Mikropartikel, Farbkapsel, Sicherheitsfaden, Beschichtung, deren Farbe sich in Abhängigkeit von der Temperatur verändert, wird auf die obige Diskussion verwiesen.

Wie bereits oben ausgeführt, ist es bei der Herstellung von gedruckten Antennen beim z.B. Siebdruckverfahren besonders vorteilhaft die Pigmente und/oder Mikropartikel und/oder Farbkapseln einem Bindemittel beizumischen. Dies erleichtert und vereinfacht die Verarbeitung der Antennendruckpaste mit den beigemischten Sicherheitsmerkmalen und damit die Herstellung von erfindungsgemäßen Antennen und führt zu einer geringen Ausschußquote, so wie dies bereits oben beschrieben wurde. Neben der Bemischung können die genannten Sicherheitsmerkmale auch auf der Oberfläche der Antenne angebracht werden.

Entsprechend der weiter oben angeführten Diskussion ist es von Vorteil, daß bei der Herstellung einer aus Draht hergestellten Antenne wenigstens ein Pigment und/oder ein Mikropartikel und/oder eine Farbkapsel und/oder wenigstens ein Sicherheitsfaden mit einem Isolierlack auf den Draht aufgetragen wird und/ oder die genannten Sicherheitsmerkmale auf dem Isolierlack angebracht werden oder daß anstatt oder zusätzlich zum Isolierlack wenigstens eine Beschichtung auf den Draht aufgetragen wird, die in Abhängigkeit von der Temperatur ihre Farbe verändert. Dies hätte den Vorteil, daß die verwendeten Sicherheitsmerkmale relativ einfach auf den Draht aufgetragen werden könnten und damit die Herstellungskosten reduziert werden könnten.

Bei der Herstellung einer geätzten Antenne können die Pigmente z. B. mit Hilfe eines Aufdampfverfahrens auf die Antenne aufgedampft werden. Dies ist eine relativ einfache und kostengünstige Methode um die Pigmente auf die Antennenoberfläche zu bringen. Ferner lassen sich damit hohe Produktionszahlen bei einem vergleichsweise niedrigem Herstellungspreis und hoher Qualität erreichen. Die anderen genannten Sicherheitsmerkmale können dann auf der Antennenoberfläche angebracht werden.

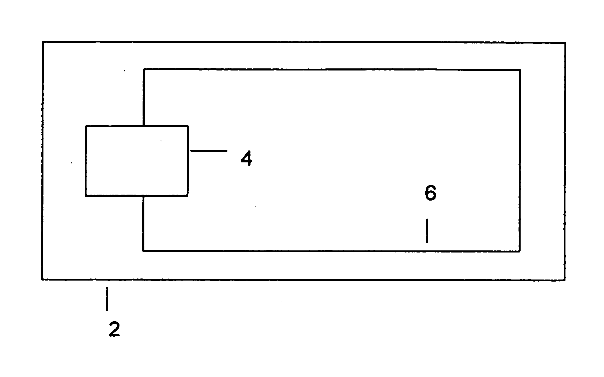

Die Erfindung soll nun anhand einem bevorzugten Ausführungsbeispiel beschrieben werden, das in Figur 1 beispielhaft dargestellt ist.

Das in Fig. 1 dargestellte Ausführungsbeispiel eines tragbaren Datenträgers zeigt den prinzipiellen Aufbau einer Chipkarte 2, welche einen Halbleiterchip 4 enthält, der mit einer Antenne 6 verbunden ist. Die vorliegende Erfindung löst die Aufgabe, Sicherheitselemente für transparente oder teiltransparente kontaktlose Chipkarten zur Verfügung zu stellen, indem der Antenne 6 Sicherheitselemente hinzugefügt werden. Prinzipiell kann die Antenne 6 eine gedruckte Antenne, eine Drahtantenne oder eine durch einen Prozeß aus den Schritten Beschichtung, Belichtung und Ätzen hergestellte Antenne sein.
Unabhängig davon, wie die Antenne 6 aufgebaut ist, wird der Antenne 6 als ein Sicherheitsmerkmal ein Pigment oder eine Oberflächenstruktur hinzugefügt.

Für den Fall einer gedruckten Antenne, besteht diese aus einer im Siebdruck aufgebrachten Silberleitpaste auf einem Kunststoffträger. Die Silberleitpaste besteht aus ihren Hauptkomponenten Silberflakes, welche die elektrische Leitfähigkeit der Antenne 6 ermöglichen, und einem dazu notwendigen Bindemittel.

Um die Sicherheit zu erhöhen oder auch die Antenne als Designelement zu nützen, können in das Bindeelement folgende Elemente eingebracht werden. Prinzipiell handelt es sich bei diesen Elementen um Sicherheitspigmente, wie sie z.B. aus dem Banknotendruck her bekannt sind. Bei diesen Pigmenten ist zunächst zwischen den Pigmenten zu unterscheiden, die ohne Hilfsmittel erkennbar sind und denjenigen, die nur mit Hilfsmitteln erkennbar sind. Ohne Hilfsmittel erkennbare Pigmente sind Farbpigmente, z.B. Druckerschwärze, oder Pigmente mit optischen Effekten. Bei Pigmenten mit optischen Effekten ist zu unterscheiden zwischen Pigmenten mit Farbkippeffekt, thermochromen Pigmenten und Pigmenten mit Glitzereffekt. Pigmente mit Farbkippeffekt sind z.B. Dünnschichtpigmente, wie z.B. Iriodin®, oder Flüssigkristallpigmente. Thermochrome Pigmente sind z.B. Flüssigkristalle. Pigmente mit Glitzereffekt, sind z.B. Metallplättchen aus z.B. Aluminium oder Silber.

Pigmente, die nur mit Hilfsmitteln erkennbar sind, sind Lumineszenzpigmente, magnetische Pigmente, elektrisch leitende Pigmente oder Infrarot absorbierende Stoffe. Bei Lumineszenzpigmenten geschieht die Anregung durch elektromagnetische Strahlung in unterschiedlichen Spektralbereichen, wobei die Emission durch elektromagnetische Strahlung in unterschiedlichen Spektralbereichen stattfinden kann, z.B. Anregung im ultravioletten Spektralbereich und Emission im sichtbaren Spektralbereich. Stoffe für Lumineszenzpigmente werden in Abhängigkeit von der zu erzielenden Sicherheit ausgewählt; bei niedrigem Sicherheitslevel, wie z.B. an Kassen in Supermärkten, reichen Stoffe aus, die im ultravioletten Spektralbereich angeregt werden und die im sichtbaren Spektralbereich elektromagnetische Strahlung emittieren. Bei Zentralbanken werden z.B. Lumineszenzstoffe verwendet, die im nicht sichtbaren Spektralbereich eine elektromagnetische Strahlung emittieren und so nur mit speziellen Sensoren vermessen werden können. Grundsätzlich ist hier also Anregung und Emission in unterschiedlichen Spektralbereichen möglich. Häufig findet eine Anregung im ultravioletten, infraroten oder sichtbaren Spektralbereich statt. Alternativ ist auch eine Anregung durch ein elektrisches Feld möglich. Eine Emission ist somit, wie oben bereits beschrieben worden ist, in unterschiedlichen oder gleichen Spektralbereichen möglich.

Als weitere Sicherheitsmerkmale sind auch elektrisch animierte Pigmente geeignet, welche erst zum Leuchten beginnen, wenn ein Feld an der Antenne anliegt. Diese könnte dann ihr emittiertes Licht an eine LISA-Folie abgeben, welche das Licht über die Kartenstanzkante abstrahlt.

Ferner sind als Sicherheitsmerkmale thermochrome Pigmente möglich, wobei sich die Farbe der Pigmente, welche sich auf der Antenne 6 befinden, bei Temperaturänderung verändern. Dieser Effekt kann durch von außen zugeführte Wärme erreicht werden, oder z.B. durch Selbsterwärmung der Antenne durch das Einbringen der Antenne 6 in das Feld eines kontaktlosen Lesers.

Eine andere Möglichkeit für ein Sicherheitsmerkmal sind Mikropartikel, z.B. Logo von der jeweiligen Firma, aus z.B. Metall oder Kunststoff oder anderen Materialien. Die Mikropartikel können sich einzeln oder verkettet im Bindemittel der gedruckten Antenne 6 befinden.

Desweiteren sind auch Kombinationen der beschriebenen Möglichkeiten bei zwei- oder mehrfachem Antennendruck möglich.

Zusätzlich können die Silberflakes auch durch andere elektrisch leitende Materialien ersetzt werden, wie z.B. durch Gold. Bei sichtbaren Antennen von transparenten bzw. teiltransparenten kontaktlosen Karten könnte dies auch noch dazu verwendet werden, um den Status des jeweiligen Anwenders anzuzeigen, z.B. Gold für eine Senatorkarte.

Wenn sich die gedruckte Antenne auf dem Trägersubstrat befindet, kann diese noch unterschiedlich behandelt werden.

Die Oberfläche der Antenne kann vollständig oder teilweise z.B. mit einem Firmenlogo bedruckt werden. Alternativ kann der Antennenoberfläche vollständig oder teilweise eine Struktur mit einem Prägestempel eingeprägt werden. Der Prägestempel kann auch durch ein Laminierblech ersetzt werden, in welches eine Struktur eingearbeitet ist. Ferner kann durch ein geeignetes Prägeverfahren ein optisches Merkmal ähnlich dem MLI erzeugt werden.

Neben der gedruckten Antenne, gibt es auch Antennen mit einem Draht. Der verwendete Draht ist meistens aus Kupfer, welcher mit einem rötlichen Isolierlack überzogen ist. Um die optische Erscheinung des Drahtes zu verändern und Sicherheitselemente mit einzuarbeiten, gibt es folgende Möglichkeiten.

In den Isolierlack können verschiedene Pigmente, wie sie oben beschrieben worden sind, beigemischt werden. Beim Beschichten des Drahtes werden dann die Pigmente mit dem Isolierlack aufgetragen.

Das Material des Drahtes könnte z.B. durch besondere Legierungen verändert werden. Dabei könnte beim Einsatz der Karte die Echtheit geprüft werden.

Alternativ zu den Pigmenten oder zusätzlich dazu können in den Lackaufbringungsprozeß Sicherheitsfäden mit eingearbeitet werden, welche nach der Herstellung z.B. bei der transparenten Karte sichtbar sind.

Neben dem Aufbringen von Pigmenten oder Sicherheitsfäden kann die Oberfläche des Drahtes vollständig oder teilweise durch z.B. ein Hindurchziehen zwischen zwei oder mehreren gegenläufigen Walzen eine Struktur, z.B. ein Firmenlogo, eingeprägt werden oder durch einen Laserstrahl beschriftet werden. Anstelle von dem Draht kann auch dem Lack oder auch einer anderen Schicht auf dem Draht eine Struktur eingeprägt werden.

Als weiteres Sicherheitsmerkmal kann der Draht auch mit einer Beschichtung überzogen werden, welche in Abhängigkeit von der Temperatur ihre Farbe verändert. Diese Beschichtung kann alternativ oder zusätzlich zum oben genannten Isolierlack auf den Draht aufgebracht werden.

Neben der gedruckten Antenne und der Drahtantenne gibt es noch die Möglichkeit, eine Antenne mittels einem Verfahren zum Auftragen, Belichten und Ätzen der Beschichtung herzustellen. Die durch solch ein Verfahren hergestellte Antennen 6 werden auch als geätzte Antennen bezeichnet. Diese Antennen bestehen z.B. aus Kupfer oder Aluminium. Um die Sicherheit oder das optische Erscheinungsbild der Antennen zu verändern, können folgende Verfahren angewendet werden.

Durch ein sogenanntes Aufdampf- oder ein anderes Additiv-Verfahren können verschiedene Materialien, z.B. die oben beschriebenen Pigmente, nachträglich auf die Oberfläche der Antenne 6 aufgebracht werden.

Die Antenne 6 kann vollständig oder teilweise mit z.B. einem Firmenlogo bedruckt werden, oder es kann der ganzen oder nur Teilen der Antennenoberfläche eine Struktur, z.B. eines Firmenlogos, eingeprägt werden. Zum Einprägen einer Struktur kann z.B. ein Prägestempel oder ein Laminierblech verwendet werden, in das die einzuprägende Struktur eingearbeitet ist.

Ferner kann durch ein geeignetes Prägeverfahren ein optisches Merkmal ähnlich dem MLI erzeugt werden.

Entweder kann in der Ätzmaske für die Antenne 6 schon eine Mikroschrift eingearbeitet sein, welche nach dem Ätzprozeß auf der Antenne 6 sichtbar wird, oder nachträglich z.B. durch Lasergravur eingraviert werden.

Unabhängig davon, wie die Antenne 6 nun aufgebaut ist, können an die Antenne 6 auch andere elektrische Elemente, wie z.B. LED- oder eine LCD-Anzeige (z.B. e-Ink) angeschlossen werden, welche von der Antenne 6 aktiviert werden, wenn die Antenne 6 in ein elektromagnetisches Feld eines kontaktlosen Lesers gebracht wird.

Klassisch befindet sich die Antenne 6 in der Karte 2 zwischen verschieden laminierten Kunststofflagen. Um Kosten zu sparen, kann das kontaktlose Chipmodul 4 in eine Spritzgußkarte derart eingebracht werden, daß nach der Herstellung der Spritzgußkarte die zwei Antennenanschlüsse des Chipmoduls 4 zur Oberfläche hin offen und bündig mit der Kartenoberfläche abschließen. Auf diese kann dann z.B. im Einzelkartensiebdruckverfahren oder Tampondruck nachträglich eine Antenne 6 aufgedruckt werden bzw. eine andere geeignete Antenne aufgebracht werden, und dadurch das Chipmodul 4 mit der Antenne 6 verbunden werden. Idealerweise wird die Antenne 6 in einem weiteren Druckschritt mit einem Lack überzogen und durch die Lackschicht mechanisch geschützt. Dieser Lackierungsvorgang kann so ausgeführt werden, daß die Struktur der Antenne 6 auf der fertigen Karte 2 plastisch herausgearbeitet ist und gut fühlbar ist. Anstelle der gedruckten Antenne könnte z.B. die Antenne auch durch ein Prägeverfahren aus einer Metallfolie (z.B. eine Hologrammfolie) aufgebracht werden. Dieses hätte auch den Vorteil, daß die auf der Antenne 6 aufgebrachten Sicherheitsmerkmale abhängig vom Typ des Sicherheitsmerkmals mit oder ohne Hilfsmittel erkennbar sind.

Eine weitere vorteilhafte Ausführungsform der vorliegenden Erfindung wäre es, wenn sich eine Antenne 6 nach der vorliegenden Erfindung und ein Modul, umfassend den Halbleiterchip 4, jeweils auf einer Karte befindet, wobei beide Karten zusammengesteckt werden müssen, um den Betrieb der kontaktlosen Chipkarte 2 zu ermöglichen. Über die Kontaktflächen der Karten werden die Karten dann verbunden und somit als Ganzes funktionsfähig. Durch eine geeignete Aufnahme der beiden Karten wird die paßgenaue Zusammenführung der beiden Karten ermöglicht. Mittels einem mechanischen Element, z.B. einem Schieber, kann der Kontakt zwischen den beiden Karten hergestellt werden, wobei aufgrund der erfindungsgemäßen Antenne z.B. die Echtheit der Karte, bzw. des Kartenmoduls einer transparenten bzw. teilweise transparenten Karte mit oder ohne Hilfsmittel festgestellt werden kann.

Somit kann bei vollständig oder teilweise transparenten kontaktlosen Chipkarten durch die Hinzufügung von Sicherheitsmerkmalen zur Antenne gemäß der vorliegenden Erfindung die Sicherheit und der Schutz gegen den Mißbrauch der Karte erhöht werden.

## Patentansprüche

1. Chipkarte (2) bestehend aus einer Vorrichtung (4) zur Speicherung und Verarbeitung von Daten, einer Antenne (6) zur Energie- und Informationsübertragung, die mit der Vorrichtung (4) verbunden ist, sowie einen die Vorrichtung (4) und die Antenne (6) umgebenden Kunststoff, wobei der Kunststoff der Chipkarte (2) transparent oder teilweise transparent ist und die Antenne (6) wenigstens ein Sicherheitsmerkmal aufweist, wobei sich das Sicherheitsmerkmal in und/oder auf der Oberfläche der Antenne (6) befindet,
**dadurch gekennzeichnet, daß** das Sicherheitsmerkmal der Antenne (6) ein Pigment ist, dessen Farbe sich in Abhängigkeit von der Temperatur verändert.

2. Chipkarte (2) nach Anspruch 1, **dadurch gekennzeichnet, daß** die Antenne (6) eine gedruckte Antenne (6) ist.

3. Chipkarte (2) nach Anspruch 2, **dadurch gekennzeichnet, daß** in einem Bindemittel einer Antennendruckpaste mindestens ein Pigment und/oder ein Mikropartikel und/oder eine Farbkapsel enthalten ist und/oder daß auf der Antennenoberfläche mindestens ein Pigment und/oder ein Mikropartikel und/oder eine Farbkapsel ist.

4. Chipkarte (2) nach Anspruch 3, **dadurch gekennzeichnet, daß** das Pigment oder der Mikropartikel oder die Farbkapsel ohne technische Hilfsmittel erkennbar ist.

5. Chipkarte (2) nach Anspruch 3, **dadurch gekennzeichnet, daß** das Pigment oder der Mikropartikel oder die Farbkapsel nur mit technischen Hilfsmitteln erkennbar ist.

6. Chipkarte (2) nach Anspruch 4 oder 5, **dadurch gekennzeichnet, daß** Mikropartikel unterschiedliche Formen und/oder Farben und/oder Oberflächenstrukturen und/oder Beschriftungen und/oder Bilder aufweisen.

7. Chipkarte (2) nach Anspruch 1, **dadurch gekennzeichnet, daß** die Antenne (6) eine Drahtantenne ist.

8. Chipkarte (2) nach Anspruch 7, **dadurch gekennzeichnet, daß** die Drahtantenne aus einem Draht besteht, der mit einem Isolierlack beschichtet ist.

9. Chipkarte (2) nach Anspruch 8, **dadurch gekennzeichnet, daß** sich zwischen Draht und Isolierlack und/oder in und/oder auf dem Isolierlack mindestens ein Pigment und/oder ein Mikropartikel und/oder eine Farbkapsel befindet.

10. Chipkarte (2) nach Anspruch 8, **dadurch gekennzeichnet, daß** sich zwischen Draht und Isolierlack und/oder in und/oder auf dem Isolierlack mindestens ein Sicherheitsfaden befindet.

11. Chipkarte (2) nach Anspruch 1, **dadurch gekennzeichnet, daß** die Antenne (6) eine geätzte Antenne (6) ist.

12. Chipkarte (2) nach Anspruch 11, **dadurch gekennzeichnet, daß** sich in und/oder auf der Oberfläche der geätzten Antenne (6) mindestens ein Pigment und/oder ein Mikropartikel und/oder eine Farbkapsel befindet.

13. Verfahren zur Herstellung einer kontaktlosen Chipkarte (2) mit einer gedruckten oder aus Draht hergestellten oder geätzten Antenne (6) gemäß den vorhergehenden Ansprüchen, einer Vorrichtung (4) zur Speicherung und Verarbeitung von Daten, die mit der Antenne (6) verbunden ist, und einem Kunststoffkörper, der die Vorrichtung (4) und die Antenne (6) umgibt, wobei der Kunststoffkörper transparent oder teilweise transparent ist, wobei wenigstens ein Sicherheitsmerkmal auf die Oberfläche der Antenne (6) aufgebracht wird und/oder mit dem Material der Antenne (6) vermischt wird, **dadurch gekennzeichnet, daß** als Sicherheitsmerkmal ein Pigment, dessen Farbe sich in Abhängigkeit von der Temperatur verändert, verwendet wird.

## Claims

1. A chip card (2) consisting of an apparatus (4) for storing and processing data, an antenna (6) for transmitting energy and information which is connected to the apparatus (4), as well as a plastic surrounding the apparatus (4) and the antenna (6), wherein the plastic of the chip card (2) is transparent or partially transparent and the antenna (6) has at least one security feature, wherein the security feature is disposed in and/ or on the surface of the antenna (6),
**characterized in that** the security feature of the antenna (6) is a pigment whose color changes in dependence of the temperature.

2. The chip card (2) according to claim 1, **characterized in that** the antenna (6) is a printed antenna (6).

3. The chip card (2) according to claim 2, **characterized in that** in a binding agent of an antenna printing paste at least a pigment and/ or a micro particle and/ or a color capsule is contained and/ or that on the antenna surface there is at least a pigment and/ or a micro particle and/ or a color capsule.

4. The chip card (2) according to claim 3, **characterized in that** the pigment or the micro particle or the color capsule is detectable without technical aids.

5. The chip card (2) according to claim 3, **characterized in that** the pigment or the micro particle or the color capsule is detectable only with technical aids.

6. The chip card (2) according to claim 4 or 5, **characterized in that** micro particles have different shapes and/ or colors and/ or surface structures and/ or inscriptions and/ or images.

7. The chip card (2) according to claim 1, **characterized in that** the antenna (6) is a wire antenna.

8. The chip card (2) according to claim 7, **characterized in that** the wire antenna consists of a wire which is coated with an insulating lacquer.

9. The chip card (2) according to claim 8, **characterized in that** between the wire and the insulating lacquer and/ or in and/ or on the insulating lacquer at least a pigment and/ or a micro particle and/ or a color capsule is disposed.

10. The chip card (2) according to claim 8, **characterized in that** between the wire and the insulating lacquer and/ or in and/ or on the insulating lacquer at least a security thread is disposed.

11. The chip card (2) according to claim 1, **characterized in that** the antenna (6) is an etched antenna (6).

12. The chip card (2) according to claim 11, **characterized in that** in and/ or on the surface of the etched antenna (6) at least a pigment and/ or a micro particle and/ or a color capsule is disposed.

13. A method for producing a contactless chip card (2) with an antenna (6) that is printed or produced of wire or etched according to the preceding claims, an apparatus (4) for storing and processing data which is connected to the antenna (6), and a plastic body enclosing the apparatus (4) and the antenna (6), wherein the plastic body is transparent or partially transparent, wherein at least one security feature is applied on the surface of the antenna (6) and/ or mixed with the material of the antenna (6), **characterized in that** as security feature a pigment is used whose color changes in dependence of the temperature.

## Revendications

1. Carte à puce (2) consistant en un dispositif (4) de mémorisation et de traitement de données, une antenne (6) reliée au dispositif (4) pour la transmission d'énergie et d'informations, ainsi qu'une matière plastique enveloppant le dispositif (4) et l'antenne (6), la matière plastique de la carte à puce (2) étant transparent ou partiellement transparent et l'antenne (6) présentant au moins une caractéristique de sécurité, la caractéristique de sécurité se trouvant dans et/ou sur la surface de l'antenne (6),
**caractérisée en ce que** la caractéristique de sécurité de l'antenne (6) est un pigment dont la couleur change en fonction de la température.

2. Carte à puce (2) selon la revendication 1, **caractérisée en ce que** l'antenne (6) est une antenne imprimée (6).

3. Carte à puce (2) selon la revendication 2, **caractérisée en ce qu'**au moins un pigment et/ou une microparticule et/ou une capsule d'encre est contenu(e) dans un liant d'une pâte d'impression d'antenne et/ou **en ce qu'**au moins un pigment et/ou une microparticule et/ou une capsule d'encre est sur la surface de l'antenne (6).

4. Carte à puce (2) selon la revendication 3, **caractérisée en ce que** le pigment ou la microparticule ou la capsule d'encre est reconnaissable sans aide technique.

5. Carte à puce (2) selon la revendication 3, **caractérisée en ce que** le pigment ou la microparticule ou la capsule d'encre n'est reconnaissable qu'avec aide technique.

6. Carte à puce (2) selon la revendication 4 ou 5, **caractérisée en ce que** des microparticules présentent différentes formes et/ou couleurs et/ou structures de surface et/ou inscriptions et/ou images.

7. Carte à puce (2) selon la revendication 1, **caractérisée en ce que** l'antenne (6) est une antenne filaire.

8. Carte à puce (2) selon la revendication 7, **caractérisée en ce que** l'antenne filaire consiste en un fil revêtu d'un vernis isolant.

9. Carte à puce (2) selon la revendication 8, **caractérisée en ce qu'**au moins un pigment et/ou une microparticule et/ou une capsule d'encre se trouve entre le fil et le vernis isolant et/ou dans et/ou sur le vernis isolant.

10. Carte à puce (2) selon la revendication 8, **caractérisée en ce qu'**au moins un fil de sécurité se trouve entre le fil et le vernis isolant et/ou dans et/ou sur le vernis isolant.

11. Carte à puce (2) selon la revendication 1, **caractérisée en ce que** l'antenne (6) est une antenne gravée (6).

12. Carte à puce (2) selon la revendication 11, **caractérisée en ce qu'**au moins un pigment et/ou une microparticule et/ou une capsule d'encre se trouve dans et/ou sur la surface de l'antenne gravée (6).

13. Procédé de fabrication d'une carte à puce (2) sans contact comprenant une antenne (6) imprimée ou fabriquée avec un fil ou gravée selon les revendications précédentes, un dispositif (4) de mémorisation et de traitement de données relié à l'antenne (6), et un corps en matière plastique enveloppant le dispositif (4) et l'antenne (6), le corps en matière plastique étant transparent ou partiellement transparent, au moins une caractéristique de sécurité étant appliquée sur la surface de l'antenne (6) et/ou mélangée avec le matériau de l'antenne (6), **caractérisé en ce que** c'est un pigment dont la couleur change en fonction de la température qui est utilisé en tant que caractéristique de sécurité.
